(19) Europäisches Patentamt / European Patent Office / Office européen des brevets

(11) **EP 4 469 701 B1**

(12) **EUROPÄISCHE PATENTSCHRIFT**

(45) Veröffentlichungstag und Bekanntmachung des Hinweises auf die Patenterteilung:
**04.02.2026   Patentblatt 2026/06**

(21) Anmeldenummer: **23701936.9**

(22) Anmeldetag: **24.01.2023**

(51) Internationale Patentklassifikation (IPC):
***F16H 61/02*** *(2006.01)*     ***F16H 61/06*** *(2006.01)*
***F16H 61/08*** *(2006.01)*

(52) Gemeinsame Patentklassifikation (CPC):
**F16H 61/0206; F16H 61/061; F16H 61/08;**
F16H 2061/062

(86) Internationale Anmeldenummer:
**PCT/EP2023/051657**

(87) Internationale Veröffentlichungsnummer:
**WO 2023/144130 (03.08.2023 Gazette 2023/31)**

(54) **VERFAHREN UND STEUERGERÄT ZUM BETREIBEN EINER VORRICHTUNG MIT EINER HYDRAULISCHEN DRUCKQUELLE**

METHOD AND CONTROL DEVICE FOR OPERATING A DEVICE HAVING A HYDRAULIC PRESSURE SOURCE

PROCÉDÉ ET DISPOSITIF DE COMMANDE POUR LE FONCTIONNEMENT D'UN DISPOSITIF PRÉSENTANT UNE SOURCE DE PRESSION HYDRAULIQUE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität:  **26.01.2022   DE 102022200852**

(43) Veröffentlichungstag der Anmeldung:
**04.12.2024   Patentblatt 2024/49**

(73) Patentinhaber: **ZF Friedrichshafen AG**
**88046 Friedrichshafen (DE)**

(72) Erfinder:
• **SCHMIDT, Thilo**
**88074 Meckenbeuren (DE)**
• **HAEGELE, Bernd**
**88213 Ravensburg (DE)**
• **VINCENT, Valentine**
**88046 Friedrichshafen (DE)**
• **SCHUPP, Christian**
**88364 Wolfegg (DE)**

(74) Vertreter: **ZF Friedrichshafen AG**
**Gewerblicher Rechtsschutz**
**Löwentalerstraße 20**
**88046 Friedrichshafen (DE)**

(56) Entgegenhaltungen:
DE-A1- 10 227 361      DE-A1- 102011 121 880
DE-A1- 102018 210 223      DE-A1- 102019 210 248

**Beschreibung**

Die Erfindung betrifft ein Verfahren zum Betreiben einer Vorrichtung mit einer hydraulischen Druckquelle und mit einem steuerbaren Durchflussregelventil gemäß der im Oberbegriff des Patentanspruches 1 näher definierten Art. Des Weiteren betrifft die Erfindung ein Steuergerät zur Durchführung des Verfahrens sowie ein entsprechendes Computerprogrammprodukt.

Aufgrund von Bauraumbeschränkungen und steigendem Kostendruck werden Bauteile von hydraulischen Systemen, insbesondere von Automatgetrieben von Fahrzeugen, die proportional gesteuerte Durchflussregelventile bzw. Druckregelventile umfassen, zunehmend miniaturisiert. Derartige proportional gesteuerte Durchflussregelventile werden über vorgeschaltete Ventile betätigt. Zur Verringerung des Bauraumbedarfes werden die proportional gesteuerten Durchflussregelventile und die vorgeschalteten Ventile durch sogenannte direkt angesteuerte Durchflussregelventile ersetzt. Dabei wirkt jeweils ein Aktor über einen beispielsweise elektromagnetisch betätigbaren Stößel direkt mit einem Ventilschieber eines solchen direkt gesteuerten Durchflussregelventils zusammen.

Aufgrund der Miniaturisierung und der direkten Anbindung der Aktoren an die Durchflussregelventile sind die Stellkräfte, die zur Betätigung der Durchflussregelventile aufzubringen sind, kleiner als bei Ventilen, die mit größeren Abmessungen ausgeführt sind. Die Reduzierung der Stellkräfte der Aktoren führt dazu, dass Störgrößen auf die Regelung der Durchflussregelventile unerwünscht große Auswirkungen haben und sogenannte Druckverstimmungen der System auftreten. Eine solche Störgröße stellen beispielsweise Strömungskräfte dar, die an Steuerkanten von Ventilen auftreten, wenn durch die Durchflussregelventile große Hydraulikfluid-Volumenströme geführt werden.

Die Strömungskräfte wirken dabei den Stellkräften entgegen, die von den Aktoren bereitgestellt werden. Deshalb erfolgt die hydraulische Versorgung von Nachfolgesystemen der Durchflussregelventile, wie Schaltelementen und Kühlsystemen von Automatgetrieben, entweder mit zu hohen oder zu niedrigen Drücken. Die jeweils eingestellten Drücke weichen von vorgegebenen Soll-Druckwerten derart ab, dass der jeweils angeforderte Betriebszustand nicht innerhalb gewünschter Betriebszeiten erreicht wird. Diese Druckverstimmungen bzw. Druckverschiebungen führen dazu, dass die Systeme nicht in der Weise angesteuert werden, wie es über die eingestellte Aktorkraft angestrebt wird.

Die Höhe der Druckverschiebungen ist zudem von einer Vielzahl von Betriebsparametern eines hydraulischen Systems abhängig. Diese Abhängigkeit führt dazu, dass die zeitliche Ansteuerung eines Nachfolgesystems entweder entsprechend der Druckverschiebungen geändert werden muss, oder es werden im Hydauliksystem Kraftänderungen im Bereich von Aktoren so eingestellt, dass die Druckverschiebungen, die jeweils aus den Strömungskräften resultieren, kompensiert werden.

Für eine vollständige Kompensation der Druckverschiebungen ist jedoch die Kenntnis aller äußeren Einflussfaktoren, wie eines aktuellen Systemdrucks einer Druckquelle und einer Betriebstemperatur, der inneren Einflussfaktoren, wie dem Durchfluss durch das Durchflussregelventil, und des Gegendrucks des Nachfolgesystems erforderlich.

Derzeit werden hydraulisch betätigbare reibschlüssige Schaltelemente, wie reibschlüssige Kupplungen oder Bremsen von Automatgetrieben, im Wesentlichen über zweiphasige Steuer- und Regelroutinen in den Kraftfluss eines Fahrzeugantriebsstranges zugeschaltet. In der ersten Phase bzw. der sogenannten Vorbefüllphase wird ein Kolbenraum eines solchen Schaltelementes mit Öl befüllt. Während der Befüllung des Kolbenraumes des Schaltelementes wird ein hoher Hydraulikfluid-Volumenstrom durch ein Durchflussregelventil in Richtung des Kolbenraumes geführt. Dabei herrscht zwischen dem Durchflussregelventil und dem Kolbenraum nur ein geringer Gegendruck. Das reibschlüssige Schaltelement überträgt in der ersten Phase noch kein nennenswertes Drehmoment. Die Befüllung des Kolbenraumes des betreffenden Schaltelementes wird je nach Schaltungsart mit unterschiedlichen Volumenströmen durchgeführt.

Während der zweiten Phase bzw. der sogenannten Druckregelphase wird der Druck im Kolbenraum jeweils geregelt eingestellt, um das übertragbare Drehmoment eines reibschlüssigen Schaltelementes im angeforderten Umfang einzustellen. Dabei soll das Drehmoment proportional zum angesteuerten Druck geregelt eingestellt werden. Während der zweiten Phase werden im Wesentlichen nur noch geringe Volumenströme durch das Durchflussregelventil geführt, das dem Kolbenraum des Schaltelementes in Bezug auf die Druckquelle vorgeschaltet ist.

Aufgrund der Tatsache, dass während der ersten Phase der Volumenstrom durch das Durchflussregelventil sehr hoch ist, ist der Druckverlust im Bereich des Durchflussregelventils und im Bereich der Leitung zwischen dem Durchflussregelventil und dem Kolbenraum zu kompensieren, um den Kolbenraum des Schaltelementes innerhalb eines geforderten Zeitraums zu befüllen. Es wird versucht, die Druckverluste im Bereich des Durchflussregelventils und der Leitung über Offset-Werte bei der Druckvorgabe auszugleichen, damit der Kolbenraum zum erforderlichen Zeitpunkt seinen gewünschten Füllpunkt erreicht. Liegt eine entsprechende Anforderung vor, dass niedrigere Volumenströme bzw. längere Befüllzeiten eingestellt werden sollen, werden kleinere Offset-Werte verwendet.

Ist der Kolbenraum befüllt, wird unter der Annahme, dass das Schaltelement seinen angestrebten Betriebszustand erreicht hat, die Druckregelung gestartet. Während der Druckregelung wird idealisiert davon ausgegangen, dass durch das Durchflussregelventil kein Volumenstrom in Richtung des Kolbenraums geführt wird.

Die Ansteuerung von Schaltelementen erfolgt immer über die zeitliche Abfolge verschiedener Drücke bzw. Aktorkräfte. Daher ist es erforderlich, alle Veränderungen des Betriebszustandes des Durchflussregelventils, des Schaltelementes und des Versorgungsdrucks der Druckquelle über umfangreiche Kennfelder zu berücksichtigen. Die Applikation der Kennfelder ist für jedes Schaltelement und für jede Baugröße spezifisch angepasst durchzuführen.

Auch die Strömungskräfte beeinflussen die Funktionsweise von direkt gesteuerten Systemen in nicht vernachlässigbarer Art und Weise. Deshalb wird versucht, auch diese Einflüsse für jedes Schaltelement über Kennfelder auszugleichen. Eventuelle Veränderungen der Geometrien der Schaltelemente und der Durchflussregelventile über der Betriebsdauer müssen zusätzlich mittels Nachapplikationen berücksichtigt werden, um eine dauerhafte einwandfreie Funktionsweise von hydraulischen Systemen aufrecht erhalten zu können.

Insbesondere im Übergangsbereich zwischen der Vorbefüllphase und der Druckregelphase und bei Vorliegen großer Druckgradienten treten während der Betätigung hydraulischer Systeme große Abweichungen zwischen angeforderten Soll-Betriebszuständen und aktuellen Ist-Betriebszuständen auf. Zudem weisen insbesondere stromab von Durchflussregelventilen angeordnete Nachfolgesysteme gegebenenfalls große Bauteilelastizitäten bzw. Bauteilweichheiten auf, die besonders eine Druckansteuerung von Schaltelementen erschweren.

Die DE 10 2019 210 248 A1 offenbart ein Verfahren zum Betrieb einer Antriebsstrang Einheit.

Aus der DE 10 2011 121 880 A1 ist ein als nächstliegend betrachtetes Verfahren zum Betätigen einer hydraulisch betätigten Kupplung bekannt, bei welchem Umgebungsbedingungen bei der Ansteuerung von Steuerelementen berücksichtigt werden.

Es ist eine bevorzugte Aufgabe der vorliegenden Erfindung, zumindest einen Nachteil von einer vorbekannten Lösung zu verringern oder zu beheben oder eine alternative Lösung vorzuschlagen. Es ist insbesondere eine bevorzugte Aufgabe der hier offenbarten Erfindung, ein Verfahren und ein Steuergerät zum Betreiben einer Vorrichtung mit einer hydraulischen Druckquelle und mit einem steuerbaren Durchflussregelventil bereitzustellen, die hinsichtlich mindestens eines der folgenden Faktoren verbessert sind: Durchführbarkeit, Herstellungszeit, Herstellungskosten, Komplexität der Herstellung, Bauraumausnutzung, Betriebssicherheit, Nachhaltigkeit und/oder Bauteilzuverlässigkeit. Weitere bevorzugte Aufgaben können sich aus den vorteilhaften Effekten der hier offenbarten Technologie ergeben.

Eine besonders bevorzugte Aufgabe der vorliegenden Erfindung wird darin gesehen, eine Ansteuerlogik für eine Vorrichtung mit einer hydraulischen Druckquelle und mit einem steuerbaren Durchflussregelventil zur Verfügung zu stellen, mittels der eine situativ bestimmbare Kompensation aller Einflussgrößen aus physikalischen Gegebenheiten auf einfache Art und Weise durchführbar ist.

Aus verfahrenstechnischer Sicht erfolgt eine Lösung dieser Aufgabe/n ausgehend vom Oberbegriff des Patentanspruches 1 in Verbindung mit dessen kennzeichnenden Merkmalen. Ein Steuergerät sowie ein Computerprogrammprodukt sind zudem Gegenstand der weiteren unabhängigen Ansprüche 9 und 10. Vorteilhafte Weiterbildungen sind Gegenstand der Unteransprüche sowie der nachfolgenden Beschreibung. Es wird ein Verfahren zum Betreiben einer Vorrichtung mit einer hydraulischen

Druckquelle und mit einem steuerbaren Durchflussregelventil vorgeschlagen, an dem ein hydraulischer Druck der Druckquelle anliegt und in deren Bereich ein Betätigungsdruck für ein hydraulisch betätigbares Schaltelement eingestellt wird. Der Betätigungsdruck liegt stromab des Durchflussregelventils im Bereich eines Kolbenraumes des Schaltelementes an, in dem ein Kolben zwischen zwei Endstellungen längsverschieblich angeordnet ist.

Dabei werden vorliegend unter dem Begriff Schaltelement formschlüssige und auch reibschlüssige Schaltelemente subsumiert, die jeweils ein Drehmoment über eine formschlüssige oder eine reibschlüssige Verbindung übertragen. Solche Schaltelemente können beispielsweise Kupplungen oder Bremsen sein, die jeweils ein Drehmoment über eine reibschlüssige Verbindung übertragen. Dabei variiert jeweils das über ein solches reibschlüssiges Schaltelement übertragbare Drehmoment in Abhängigkeit der jeweils am reibschlüssigen Schaltelement anliegenden Schließkraft und ist bevorzugt stufenlos einstellbar. Die Schließkraft korrespondiert beispielsweise mit einem am Schaltelement anliegenden Hydraulikdruck. Im Unterschied hierzu ist das jeweils über ein formschlüssiges Schaltelement übertragbare Drehmoment nicht stufenlos einstellbar.

Die Erfindung umfasst nun die technische Lehre, dass eine Vorsteuerung des Druchflussregelventils in Abhängigkeit eines Hydraulikfluid-Volumenstromes erfolgt, der durch das Durchflussregelventil zu führen ist, um im Kolbenraum des Schaltelementes einen vorgegebenen zeitlichen Verlauf des Betätigungsdruckes zu erzeugen.

Bei dem erfindungsgemäßen Verfahren erfolgt die Bestimmung der Übertragungsfähigkeit des Durchflussregelventils somit im Gegensatz zum Stand der Technik in Abhängigkeit das jeweils aktuell einzustellenden Betriebszustand des Schaltelementes. Eine Vorsteuerung des Durchflussregelventils wird bei der erfindungsgemäßen hydraulischen Ansteuerung des Schaltelementes unter Berücksichtigung aller bekannter Einflussgrößen durchgeführt. Dies ist der Fall, da das Durchflussregelventil in Abhängigkeit des Wunschdruckes im Kolbenraum des Schaltelementes betätigt wird, der jeweils betriebszustandsabhängig einzustellen ist. Mit anderen Worten erfolgt die Ansteuerung des Schaltelementes immer unter Vorsteuerung aller bekannter Einflussgrößen und aus dem Wunschdruck im Kolbenraum des Schaltelementes heraus.

Der erfindungsgemäßen Vorgehensweise liegt die Kenntnis zugrunde, dass die Übertragungsfähigkeit eines Schaltelementes, wie einer reibschlüssigen Kupplung oder Bremse, in der Regel einer zeitlich exakt festgelegten Abfolge unterliegt. Die Übertragungsfähigkeit ist dabei eineindeutig mit einer Position eines Kupplungskolbens verbunden, die eineindeutig mit einem Druck im Kolbenraum eines Schaltelementes korrespondiert. Somit ist durch eine Ansteuerung des Druckes im Kolbenraum eine Bestimmung der Übertragungsfähigkeit eines Schaltelementes möglich und das Durchflussregelventil exakt und ohne aufwändige Adaptionsroutinen und auch ohne umfangreiche Kennfelder in der erforderlichen Art und Weise betätigbar.

Bei dem mit geringem Steuer- und Regelaufwand durchführbaren erfindungsgemäßen Verfahren wird in Abhängigkeit des zeitlichen Verlaufes des Betätigungsdruckes jeweils ein aktuelles Füllvolumen des Kolbenraumes und eine aktuelle Bauteilelastizität des Schaltelementes bestimmt. Die Bauteilelastizität des Schaltelementes variiert in Abhängigkeit einer Stellung des Kolbens des Schaltelementes.

Die Bauteilelastizität ist ein bestimmender Faktor für den Druck im Kolbenraum des Schaltelementes. Dabei ist der Zusammenhang zwischen der aktuellen Bauteilelastizität und dem Druck im Kolbenraum des Schaltelementes so, dass der Druckanstieg im Kolbenraum bei hoher Bauteilelastizität trotz hohem Hydraulikfluid-Volumenstrom vergleichsweise gering ist, während der Druckanstieg bei geringer Bauteilelastizität und geringem Hydraulikfluid-Volumenstrom hoch ist.

Jedem Druckniveau im Kolbenraum kann eine eineindeutige Position des Kolbens zugewiesen werden. Mithilfe dieser Beziehung ist das aktuelle Volumen des Kolbenraums des Schaltelementes bestimmbar. Zusätzlich kann die Bauteilelastizität bzw. die Elastizitätscharakteristik des Schaltelementes auf einfache Art und Weise über einen funktionalen Zusammenhang zwischen dem Füllvolumen des Kolbenraumes und dem Druck im Kolbenraum ermittelt werden. Dabei beschreibt die Änderung bzw. Ableitung des funktionalen Zusammenhanges zwischen dem Volumen des Kolbenraumes und dem Druck im Kolbenraume die Elastizitätscharakteristik.

Der Hydraulikfluid-Volumenstrom, der durch das Druckregelventil zu führen ist, kann auf einfache Art und Weise in Abhängigkeit des Produktes aus der vorgegebenen zeitlichen Druckänderung im Kolbenraum und der positionsabhängigen Bauteilelastizität des Schaltelementes ermittelt werden.

Dabei können das jeweils aktuelle Füllvolumen des Kolbenraumes und die aktuell damit in Verbindung stehende Bauteilelastizität bei einfach durchführbaren Varianten des erfindungsgemäßen Verfahrens mit geringem Aufwand über Kennlinien bestimmt werden.

Des Weiteren besteht die Möglichkeit, dass ein Strömungswiderstand einer Leitung, die das Durchflussregelventil mit dem Kolbenraum des Schaltelementes verbindet, in Abhängigkeit des ermittelten Hydraulikfluid-Volumenstromes mit geringem Aufwand und hoher Genauigkeit bestimmt wird. Zusätzlich kann es vorgesehen sein, dass der Strömungswiderstand der Leitung in Abhängigkeit der Temperatur des Hydraulikfluides bestimmt wird, welches durch die Leitung geführt wird.

In Abhängigkeit des Strömungswiderstandes der Leitung kann ein Druckverlust in der Leitung zwischen dem Durchflussregelventil und dem Kolbenraum des Schaltelementes bestimmt werden. Zusätzlich besteht die Möglichkeit, dass aus der Summe des Druckverlustes in der Leitung und des Drucks im Kolbenraum, der messtechnisch ermittelt oder geschätzt werden kann oder über eine Sollwertvorgabe bestimmbar ist, der Druck direkt nach dem Durchflussregelventil ermittelt wird.

Dabei kann der Druck im Kolbenraum des Schaltelementes über einen entsprechend positionierten Sensor messtechnisch ermittelt werden. Im Gegensatz dazu kann der Druck im Kolbenraum über ein Modell bestimmt bzw. geschätzt werden, das die Vorrichtung entsprechend abbildet. Die Sollwertvorgabe des Druckes im Kolbenraum ist jeweils über den vorgegebenen zeitlichen Verlauf des Betätigungsdruckes im Kolbenraum ermittelbar.

Mit anderen Worten wird aus dem gewünschten Hydraulikfluid-Volumenstrom und in Abhängigkeit des bekannten Widerstandes der Kupplungszuführung, die der Leitung zwischen dem Durchflussregelventil und dem Kolbenraum entspricht, der Druckverlust in dieser Leitung bestimmt. Die Summe aus dem Druck im Kolbenraum des Schaltelementes und dem Druckverlust in der Leitung ergibt einen Gesamtdruck, der am Abzweigungspunkt der Leitung am Durchflussregelventil bzw. direkt nach dem Durchflussregelventil vorliegen muss, damit im Kolbenraum der angeforderte Druck erreicht wird.

Bei einer weiteren vorteilhaften Variante des erfindungsgemäßen Verfahrens wird der Durchflusswiderstand des Durchflussregelventils während eines Betriebszustandsverlaufes des Schaltelementes, während dem der Druck im Kolbenraum angehoben wird, aus der Druckdifferenz zwischen dem Druck, der von der Druckquelle eingangsseitig am Durchflussregelventil anliegt, und dem Druck direkt nach dem Durchflussregelventil und dem Hydraulikfluid-Volumenstrom bestimmt, der durch das Durchflussregelventil zu führen ist.

Das bedeutet, dass über den Druck direkt nach dem Durchflussregelventil und dem bekannten Versorgungsdruck, der eingangsseitig am Durchflussregelventil von der Druckquelle anliegt, die am Durchflussregelventil vorherrschende Druckdifferenz bestimmt wird. Zusätzlich wird in Verbindung mit dem bekannten Volumenstrom, der durch das Durchflussregelventil zu führen ist, auch der Druckverlust im Bereich des Durchflussregelventils ermittelt, der aus der am Durchflussregelventil angreifenden Strömungskraft bestimmt wird.

Im Unterschied dazu wird der Durchflusswiderstand des Durchflussregelventils während eines Betriebszustandsverlaufes des Schaltelementes, während dem der Druck im Kolbenraum abgesenkt wird, aus der Druckdifferenz zwischen dem Druck, der vom Kolbenraum des Schaltelementes am Durchflussregelventil anliegt, und dem Druck nach dem Durchflussregelventil und dem Hydraulikfluid-Volumenstrom bestimmt, der durch das Durchflussregelventil zu führen ist. Dabei entspricht der Druck nach dem Durchflussregelventil im Wesentlichen dem Druck in einer sogenannten Tankleitung, in der der Druck vorzugsweise gleich einem Umgebungsdruck bzw. einem atmosphärischen Druck der Vorrichtung ist und über die der Druck im Kolbenraum des Schaltelementes reduziert bzw. abgesenkt wird.

Das Durchflussregelventil wird bei einer weiteren vorteilhaften Variante des erfindungsgemäßen Verfahrens in Abhängigkeit der Summe aus dem Durchflusswiderstand des Durchflussregelventils, dem Druckverlust in der Leitung und dem aktuell im Kolbenraum des Schaltelementes einzustellenden Drucks vorgesteuert betätigt. Dabei kann das Durchflussregelventil zusätzlich zur Vorsteuerung auch geregelt betätigt werden.

Die Erfindung betrifft weiterhin ein Steuergerät nach Anspruch 10.

Das erfindungsgemäße Steuergerät kann mit zumindest einer Empfangsschnittstelle ausgestattet sein, die ausgebildet ist, Signale von Signalgebern zu empfangen. Die Signalgeber können beispielsweise als Sensoren ausgebildet sein, die Messgrößen erfassen und an das Steuergerät übermitteln. Ein Signalgeber kann auch als Signalfühler bezeichnet werden. So kann die Empfangsschnittstelle von einem Signalgeber ein Signal empfangen, über welches signalisiert wird, dass das Schaltelement der Vorrichtung zu überwachen ist.

Das erfindungsgemäße Steuergerät kann zudem eine Datenverarbeitungseinheit aufweisen, um die empfangenen Eingangssignale bzw. die Informationen der empfangenen Eingangssignale auszuwerten und/oder zu verarbeiten.

Auch kann das erfindungsgemäße Steuergerät mit einer Sendeschnittstelle ausgeführt sein, die ausgebildet ist Steuersignale an Stellglieder auszugeben. Unter einem Stellglied sind Aktoren zu verstehen, die die Befehle des Steuergerätes umsetzen. Die Aktoren können beispielsweise elektromagnetische Aktoren sein, über die oder über den das Durchflussregelventil angesteuert wird.

Mittels des erfindungsgemäßen Steuergerätes ist eine Vorrichtung betreibbar, die eine hydraulische Druckquelle und ein steuerbares Durchflussregelventil aufweist. An dem Durchflussregelventil liegt ein hydraulischer Druck der Druckquelle an. Im Bereich des Druckregelventils wird über das Steuergerät ein Betätigungsdruck für ein hydraulisch betätigbares Schaltelement eingestellt. Der Betätigungsdruck liegt stromab des Durchflussregelventils im Bereich eines Kolbenraumes des Schaltelementes an, in dem ein Kolben zwischen zwei Endstellungen längsverschieblich angeordnet ist.

Dabei ist das Steuergerät derart ausgeführt, dass eine Vorsteuerung des Durchflussregelventils in Abhängigkeit eines Hydraulikfluid-Volumenstromes erfolgt, der durch das Durchflussregelventil zu führen ist, um im Kolbenraum des Schaltelementes einen vorgegebenen zeitlichen Verlauf des Betätigungsdruckes zu erzeugen.

Damit wird das Durchflussregelventil über das Steuergerät derart vorgesteuert betätigt, dass im Kolbenraum des Schaltelementes der vorgegebene zeitliche Verlauf des Betätigungsdruckes immer unter Vorsteuerung aller bekannter Einflussgrößen und aus dem Wunschdruck im Kolbenraum anliegt.

Die zuvor genannten Signale sind nur als beispielhaft anzusehen und sollen die Erfindung nicht beschränken. Die erfassten Eingangssignale und die ausgegebenen Steuersignale können über einen Fahrzeugbus, beispielsweise über einen CAN-Bus, übertragen werden. Das erfindungsgemäße Steuergerät kann beispielsweise als zentrales elektronisches Steuergerät eines Fahrzeuges oder als elektronisches Getriebesteuergerät ausgebildet sein.

Die vorliegende Erfindung wird auch durch ein Computerprogrammprodukt nach Anspruch 10 definiert.

Die Erfindung ist nicht auf die angegebene Kombination der Merkmale der nebengeordneten Ansprüche oder der hiervon abhängigen Ansprüche beschränkt. Es ergeben sich darüber hinaus Möglichkeiten, einzelne Merkmale, auch soweit sie aus den Ansprüchen, der nachfolgenden Beschreibung von Ausführungsformen oder unmittelbar aus der Zeichnung hervorgehen, miteinander zu kombinieren, wobei die vorliegende Erfindung und der damit in Zusammenhang stehende Schutzumfang durch die nachfolgenden Ansprüche definiert wird. Die Bezugnahme der Ansprüche auf die Zeichnungen durch Verwendung von Bezugszeichen soll den Schutzumfang der Ansprüche nicht beschränken.

Bevorzugte Weiterbildungen ergeben sich aus den Unteransprüchen und der nachfolgenden Beschreibung. Ein Ausführungsbeispiel der Erfindung wird, ohne hierauf beschränkt zu sein, anhand der Zeichnung näher erläutert.

Dabei zeigt:

Fig. 1 ein Blockschaltbild einer Vorrichtung mit einer hydraulischen Druckquelle, mit einem Durchflussregelventil und mit einem hydraulisch betätigbaren Schaltelement;

Fig. 2 das Durchflussregelventil in einer vergrößerten, schematisierten Einzelansicht;

Fig. 3 eine vergrößerte Ansicht eines in Fig. 2 näher gekennzeichneten Bereiches III;

Fig. 4     eine schematisierte, vergrößerte Einzelansicht des hydraulisch betätigbaren Schaltelementes der Vorrichtung gemäß Fig. 1; und

Fig. 5     einen Verlauf eines Volumens eines Kolbenraumes des Schaltelementes gemäß Fig. 4 und einen Verlauf der Bauteilelastizität des Schaltelementes über dem Druck im Kolbenraum des Schaltelementes.

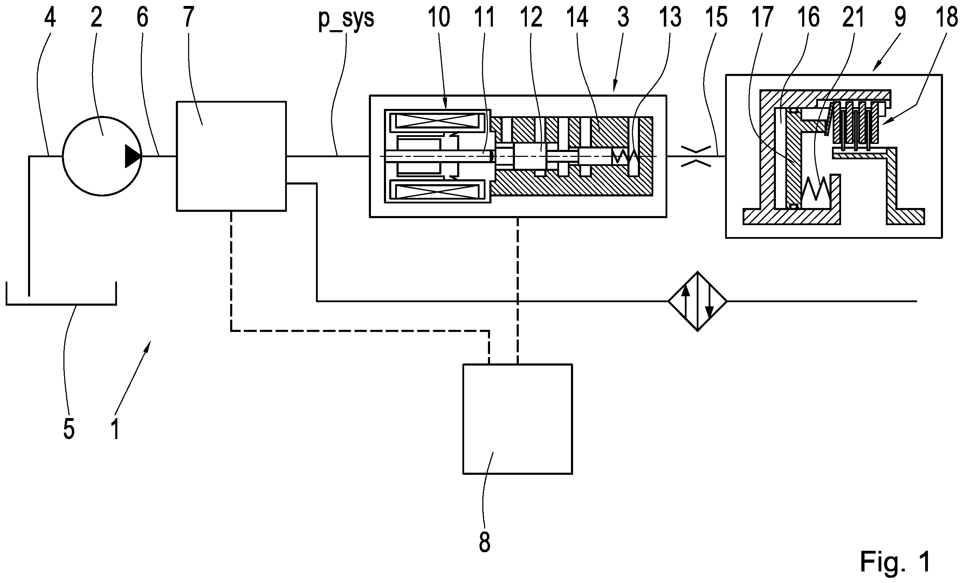

Fig. 1 zeigt ein Blockschaltbild einer Vorrichtung 1 mit einer hydraulischen Druckquelle 2 und mit einem steuerbaren Durchflussregelventil 3. Die Druckquelle 2 ist vorliegend als Hydraulikpumpe ausgeführt, deren Saugseite 4 mit einem Ölsumpf 5 eines Automatgetriebes in Verbindung steht und Hydraulikfluid aus dem Ölsumpf 5 ansaugt. Eine Druckseite 6 der Hydraulikpumpe 2 steht mit einem sogenannten Systemdruckventil 7 in Verbindung, mittels welchem zumindest vor dem Eintritt in das Durchflussregelventil 3 ein sogenannter Systemdruck p_sys eingestellt wird.

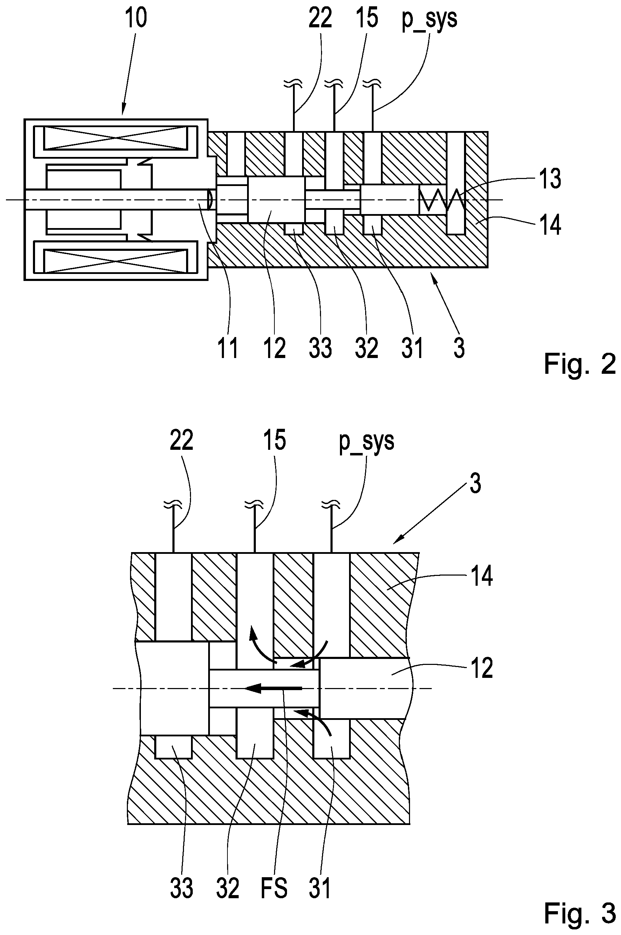

Das Systemdruckventil 7 kann hierbei entweder als Druckbegrenzungsventil oder als Druckminderventil ausgebildet sein. Als Druckbegrenzungsventil ist es parallel bzw. in einem Abzweig zu einem Bereich des Hydrauliksystems angeordnet, in welchem ein Druck herrscht, der geringer ist als der Systemdruck p_sys und begrenzt damit den Druck sowohl auf der Druckseite 6 der Hydraulikpumpe 2 als auch in der Zuleitung zum Durchflussregelventil 3, welche in Fig. 2 und 3 beispielsweise durch einen Anschluss 31 dargestellt ist. In einer alternativen Ausgestaltung als Druckminderventil wäre das Systemdruckventil 7 wie schematisch in Fig. 1 dargestellt zwischen der Hydraulikpumpe 2 bzw. deren Druckseite 6 und dem Durchflussregelventil 3 angeordnet und würde den Systemdruck p_sys unabhängig von dem von der Hyraulikpumpe 2 erzeugten Druck nur stromabwärts des Systemdruckventils 7 einstellen. Als weitere Möglichkeit wäre eine Ausgestaltung eines komplexeren Ventilsystems möglich, mittels welchem der Systemdruck p_sys stromabwärts des Systemdruckventils 7 zum Durchflussregelventil 3 hin einstellbar ist, und für einen Druckbereich des Hydrauliksystems wie beispielsweise eines Kühl- und/oder Schmiersystems ein Druck, der geringer ist als der Systemdruck p_sys.

Der Systemdruck p_sys liegt am Durchflussregelventil 3 bzw. in einem Anschluss 31 (Fig. 2 und 3) an und wird in Abhängigkeit einer Ansteuerung des Durchflussregelventils 3 seitens eines Getriebesteuergerätes 8 im Bereich des Durchflussregelventils 3 auf ein angefordertes Druckniveau eines Betätigungsdruckes eines vorliegend als reibschlüssige Kupplung ausgeführten Schaltelementes 9 der Vorrichtung 1 geregelt eingestellt.

Das Durchflussregelventil 3 ist in Fig. 2 in einer Alleindarstellung gezeigt und als ein direkt gesteuertes Druckregelventil ausgeführt, bei dem ein elektromagnetischer Aktor 10 mit einer Ankerstange 11 direkt mit einem Ventilschieber 12 des Durchflussregelventils 3 zusammenwirkt. Dabei ist der Ventilschieber 12 bei entsprechender Bestromung des elektromagnetischen Aktors 10 von der Ankerstange 11 gegen die Federkraft einer Feder 13 längsbeweglich in einem Ventilgehäuse 14 verschiebbar.

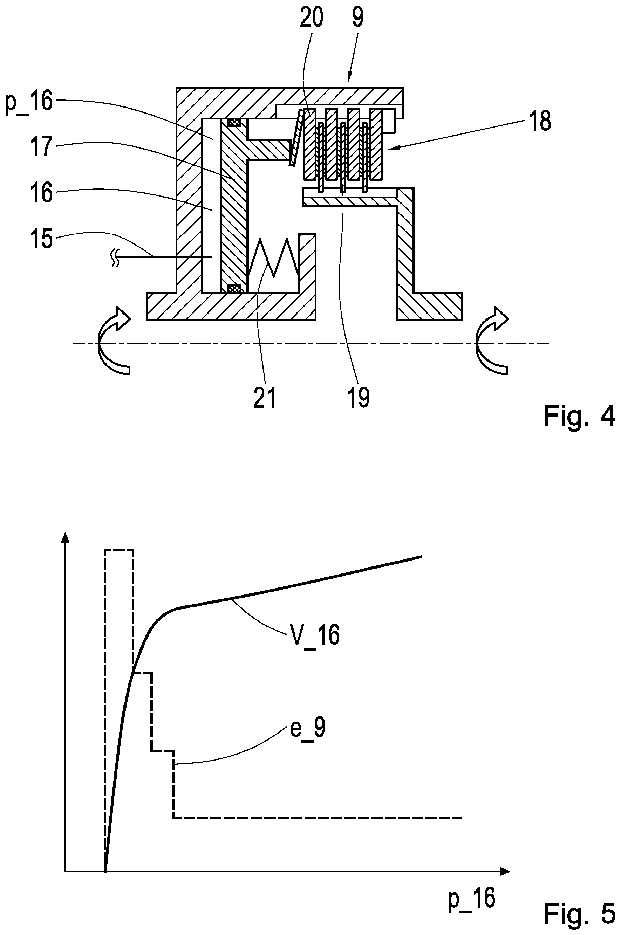

Vorliegend liegt der im Bereich des Systemdruckventils 7 eingestellte Systemdruck p_sys an einem ersten Ventilanschluss 31 des Durchflussregelventils 3 an. In Abhängigkeit der axialen Stellung des Ventilschiebers 12 steht der erste Ventilanschluss 31 in der in Fig. 3 näher gezeigten Art und Weise mit einem zweiten Ventilanschluss 32 des Durchflussregelventils 3 in Verbindung, der über eine Leitung 15 mit dem Schaltelement 9 verbunden ist. Dabei variiert sowohl der Durchfluss durch das Durchflussregelventil 3 als auch der Druck stromab des Durchflussregelventils 3 in Abhängigkeit des Systemdrucks p_sys, der axialen Stellung des Ventilschiebers 12 und des Füllvolumens eines in Fig. 4 näher dargestellten Kolbenraumes 16 des Schaltelementes 9. Im Kolbenraum 16 ist ein Kolben 17 des Schaltelementes 9 zwischen zwei Endstellungen längsverschieblich angeordnet.

Ein Lamellenpaket 18 des Schaltelementes 9 wird durch entsprechende Druckbeaufschlagung des Kolbens 17 verpresst, um über das Schaltelement 9 ein gewünschtes Drehmoment übertragen zu können. Im verpressten Zustand des Lamellenpaketes 18 befinden sich Innenlamellen 19 und Außenlamellen 20 reibschlüssig miteinander in Eingriff, wobei in vollständig geschlossenem Zustand des Schaltelementes 9 ein anliegendes Drehmoment zwischen den Innenlamellen 19 und den Außenlamellen 20 schlupffrei übertragen wird.

Im Unterschied dazu überträgt das Schaltelement 9 in vollständig geöffnetem Zustand des Schaltelementes 9 kein Drehmoment. Dann weist ein Druck p_16 im Kolbenraum 16, der nachfolgend als Kolbenraumdruck p_16 bezeichnet wird, ein solches Druckniveau auf, dass der Kolben 17 von einer Federeinheit 21 vom Lamellenpaket 18 weg verschoben wird und die Verpressung des Lamellenpaketes 18 aufgelöst ist.

Das Schaltelement 9 kann beispielsweise zur Darstellung einer Übersetzungsstufe eines Automatgetriebes in einen Kraftfluss eines Fahrzeugantriebsstranges zugeschaltet werden, der mit dem Automatgetriebe ausgeführt ist. Ergeht vom Getriebesteuergerät 8 eine entsprechende Zuschaltanforderung wird vom Getriebesteuergerät 8 ein zeitlicher Verlauf des Kolbenraumdruckes p_16 im Kolbenraum 16 des Schaltelementes 9 vorgegeben, um das Schaltelement 9 innerhalb eines definierten Betriebszeitraumes aus seinem vollständig geöffneten Betriebszustand in seinen vollständig geschlossenen Betriebszustand überführen zu können. Über den zeitlichen Verlauf des Kolbenraumdruckes p_16 bzw. des Betätigungsdruckes des Schaltelementes 9 wird ein gewünschter Verlauf der Übertragungsfähigkeit des Schaltelementes 9 vorgegeben. Aus dieser gewünschten Übertragungsfähigkeit des Schaltelementes 9 wird in der nachfolgend näher beschriebenen Art und Weise die Übertragungsfähigkeit des Durchflussregelventils 3 bestimmt.

Die Übertragungsfähigkeit des Schaltelementes 9 unterliegt einer zeitlich exakt festgelegten Abfolge. Dabei ist die Übertragungsfähigkeit des Schaltelementes 9 eineindeutig mit einer Position des Kolbens 17 verbunden. Zusätzlich ist die Position des Kolbens 17 eineindeutig mit dem Kolbenraumdruck p_16 im Kolbenraum 16 verbunden. Damit ist durch eine Ansteuerung des Kolbenraumdruckes p_16 im Kolbenraum 16 auf einfache Art und Weise eine Bestimmung der Übertragungsfähigkeit des Schaltelementes 9 möglich. Des Weiteren ist aus der bekannten Übertragungsfähigkeit des Schaltelementes 9 der damit korrespondierende Kolbenraumdruck p_16 im Kolbenraum 16 eindeutig ermittelbar.

Aufgrund der Tatsache, dass jedem Druckniveau des Kolbenraumdruckes p_16 im Kolbenraum 16 auch eine eineindeutige Position des Kolbens 17 zugewiesen werden kann, sind während des gesamten Zuschaltvorganges des Schaltelementes 9 eine Elastizitätscharakteristik e_9 des Schaltelementes 9 und ein Volumen V_16 des Kolbenraumes 16 bestimmbar. Das Volumen V_16 des Kolbenraumes 16 ist eine Funktion des Kolbenraumdruckes p_16. Die Änderung bzw. die Ableitung der Volumencharakteristik ergibt den folgenden formelmäßigen Zusammenhang für die Elastizitätscharakteristik e_9 des Schaltelementes 9:

$$e\_9 \ (p\_16) = dV\_16 \ / \ dp\_16$$

Wird nun ein zeitlicher Verlauf des Kolbenraumdruckes p_16 im Kolbenraum 16 des Schaltelementes 9, d.h. nicht im Bereich des Durchflussregelventils 13, vorgegeben, so ergibt sich durch die Multiplikation der zeitlichen Druckänderung dp_16 / dt, die gleich der Ableitung des Kolbenraumdruckes p_16 nach der Zeit t ist, mit der positionsabhängigen Elastizitätscharakteristik e_9 (p_16) der Volumenstrom, der zur Erreichung des gewünschten Druckverlaufes des Kolbenraumdruckes p_16 durch das Durchflussregelventil 3 notwendig ist. Über die Vorgabe des zeitlichen Verlaufes des Kolbenraumdruckes p_16 wird angestrebt, das Schaltelement 9 innerhalb eines vordefinierten Zeitraumes aus seinem vollständig geöffneten Betriebszustandes in einen definierten Betriebszustand, insbesondere in seinen vollständig geschlossenen Zustand zu überführen.

Fig. 5 zeigt einen Verlauf des Volumens V_16 des Kolbenraumes 16 und einen Verlauf e_9 der Bauteilelastizität des Schaltelementes 9 über dem Kolbenraumdruck p_16. Dabei ist der Darstellung gemäß Fig. 4 entnehmbar, dass die Bauteilelastizität e_9 bei niedrigen Druckwerten des Kolbenraumdruckes p_16 und geringen Volumina V_16 des Kolbenraumes 16 hohe Werte annimmt und mit steigenden Druckwerten des Kolbenraumdruckes p_16 und zunehmenden Volumen bzw. Befüllvolumen des Kolbenraumes 16 abnimmt. Dies resultiert aus der Tatsache, dass sich zu Beginn des Befüllvorganges des Kolbenraumes 16 des Schaltelementes 9 im Kolbenraum 16 zunächst nur ein geringer Druck p_16 einstellt. Der am Kolben 17 anliegende Kolbenraumdruck p_16 muss in dieser Phase der Betätigung des Schaltelementes 9 im Wesentlichen lediglich die Federkraft der Federeinheit 21 überwinden.

Erst wenn der Kolben 17 die Federeinheit 21 überdrückt hat, die bei dem vorliegend betrachteten Ausführungsbeispiel als Tellerfeder ausgebildet ist, und wenn der Kolben 17 am Lamellenpaket 18 zum Anliegen kommt und dieses beginnt zu verpressen, wird die Elastizität e_9 des Schaltelementes 9 gemäß dem in Fig. 5 dargestellten Verlauf bei gleichzeitig steigendem Kolbenraumdruck p_16 zunehmend kleiner. Dann steigt auch der Verlauf des Volumens V_16 des Kolbenraumes 16 mit wesentlich kleinerem Gradienten an. Das Schaltelement 9 weist in diesem Druckbereich des Kolbenraumdruckes p_16 eine hohe Bauteilsteifigkeit auf, da das Lamellenpaket 18 dann in einem sogenannten verblockten Betriebszustand vorliegt. In diesem verblockten Betriebszustand wird das Lamellenpaket 18 vom Kolben 17 stark verpresst und das Schaltelement 9 ist dann vollständig geschlossen. Der Kolben 16 ist dann in seiner Endlage angeordnet, die er in geschlossenem Zustand des Schaltelementes 9 einnimmt.

Während des gesamten Zuschaltvorganges des Schaltelementes 9 wird mithilfe des gewünschten Volumenstromes und des bekannten Strömungswiderstandes der Kupplungszuführung, d.h. des Strömungswiderstandes in der Leitung 15 zwischen dem Durchflussregelventil 3 und dem Kolbenraum 16 des Schaltelementes 9, der Druckverlust in der Leitung 15 bestimmt.

Der jeweils aktuell ermittelte Druckverlust in der Leitung 15 wird zu dem vorgegebenen zeitlichen Verlauf des Betätigungsdruckes bzw. des Kolbenraumdrucks p_16 addiert. Dieser aufsummierte Druckwert entspricht dem Druck in der Leitung 15 direkt nach dem Durchflussregelventil 3.

Aus dem auf diese Art und Weise ermittelten Druck nach dem Durchflussregelventil 3 und dem Systemdruck p_sys wird die Druckdifferenz am Durchflussregelventil 3 bestimmt. Dabei wird die Druckdifferenz zwischen dem Bereich der Vorrichtung 1 stromauf des ersten Ventilanschlusses 31 und dem Bereich der Vorrichtung 1 stromab des zweiten Ventilanschlusses 32 ermittelt. Zusätzlich wird in Abhängigkeit des ermittelten Hydraulikfluid-Volumenstromes die am Ventilschieber 12 angreifende Strömungskraft FS bestimmt. Daran anschließend wird der Durchflusswiderstand des Durchflussregelventiles 3 aus der Summe des Druckverlustes des Durchflussregelventils 3 und dem Druckverlust des Druckregelventils 3 ermittelt, der durch die Strömungskraft FS erzeugt wird.

Die Strömungskraft FS wirkt in der in Fig. 3 näher dargestellten Art und Weise der vom elektromagnetischen Aktor 10 bereitgestellten bzw. vorgesteuerten Kraft entgegen. Wird die Strömungskraft FS bei der Ansteuerung von Nachfolgesystemen, im vorliegenden Fall des Schaltelementes 9, nicht berücksichtigt, stellt sich im Kolbenraum 16 entweder ein zu hoher oder ein zu niedriger Kolbenraumdruck p_16 ein.

Eine solche Druckverschiebung führt dann dazu, dass das Schaltelement 9 nicht in der Weise angesteuert wird, wie es beispielsweise über die eingestellte Aktorkraft des Aktors 10 angestrebt wird. Zur Kompensation der Druckverschiebung werden zunächst der bestimmte Druckverlust in der Leitung 15 und der ermittelte Durchflusswiderstand des Durchflussregelventils 9 addiert. Dieser Druck stellt die Vorgabe für die Betätigung des Durchflussregelventils 3 dar. Der im Bereich des Durchflussregelventils 3 einzustellende Druck bzw. die zu stellende Kraft des elektromagnetischen Aktors 10 wird bei der vorliegend beschriebenen Vorgehensweise ohne die aus dem Stand der Technik bekannten aufwändigen Adaptionen, Kennfelder und dergleichen bestimmt.

Die vorbeschriebene Ermittlung wird nun für jede neue Task in Abhängigkeit der aktuellen Position des Kolbens 17 durchgeführt, bis das Schaltelement 9 keine dynamische Druckänderung mehr erfährt. Dann sind der Durchfluss im Bereich des Durchflussregelventils 3 und die Strömungskraft FS sowie der Druckverlust in der Leitung 15 im Wesentlichen gleich null. Der im Bereich des Durchflussregelventils 3 anzusteuernde Druck entspricht dann dem Druck, der im Kolbenraum 16 des Schaltelementes 9 einzustellen ist.

Damit erfolgt die Ansteuerung des Schaltelementes 9 immer unter Vorsteuerung aller bekannter Einflussgrößen und ausgehend von dem Wunschdruck, der im Kolbenraum 16 des Schaltelementes 9 einzustellen ist.

Die vorbeschriebene Vorgehensweise kann mit geringen Anpassungen auch während eines Betriebszustandsverlaufes des Schaltelementes 9 durchgeführt werden, während dem das Schaltelement 9 anforderungsgemäß aus seinem vollständig geschlossenen Betriebszustand in seinen vollständig geöffneten Betriebszustand überführt werden soll.

Während eines Abschaltvorganges des Schaltelementes 9 ist der Druck p_16 im Kolbenraum 16 des Schaltelementes 9 zu reduzieren. Hierfür ist der Ventilschieber 12 des Durchflussregelventils 3 axial zu verstellen. Dabei ist der Ventilschieber 12 von der Feder 13 so zu verschieben, dass der Ventilschieber 12 die Verbindung zwischen dem zweiten Ventilanschluss 32 und dem ersten Ventilanschluss 31 sperrt und eine Verbindung zwischen dem zweiten Ventilanschluss 32 und einem dritten Ventilanschluss 33 freigibt. Der dritte Ventilanschluss 33 ist über eine Leitung 22 mit dem Ölsumpf 5 verbunden, der im Wesentlichen drucklos ist bzw. dessen Druck gleich dem atmosphärischen Druck ist.

Grundsätzlich weisen die Verläufe des Drucks in der Leitung 15 zwischen dem Kolbenraum 16 und dem Durchflussregelventil 3 und auch des Kolbenraumdruckes p_16 während des Abschaltvorganges des Schaltelementes 9 jeweils einen negativen Druckgradient auf. Der Druckverlust in der Leitung 15 zwischen dem Schaltelement 9 und dem Durchflussregelventil 3 ist deshalb nun vom Wunschdruck im Kolbenraum 16 zu subtrahieren. Die Druckdifferenz am Durchflussregelventil 3 wird aus der Differenz des um den Druckverlust in der Leitung 15 reduzierten Kolbenraumdruckes p_16 und dem Druck im Ölsumpf 5 gebildet, wenn der zweite Ventilanschluss 32 mit dem dritten Ventilanschluss 33 in Verbindung steht.

Um ein vollständiges Leerlaufen der Vorrichtung 1 zu verhindern, kann die Leitung 22 auch zwischen dem weiteren Ventilanschluss 33 und dem Ölsumpf 5 mit einem sogenannten Vorbefüllventil ausgeführt sein. Über ein solches Vorbefüllventil kann der Druck in der Leitung 22 auf ein sogenanntes Vorbefülldruckniveau oberhalb des atmosphärischen Druckes eingestellt werden, um ein vollständiges Leerlaufen der Vorrichtung 1 im Bereich zwischen dem Durchflussregelventil 3 und dem Schaltelement 9 zu vermeiden.

Die im Bereich des Durchflussregelventils 3 während des Abschaltens des Schaltelementes 9 wirkende Strömungskraft ergibt sich aus der Druckdifferenz am Durchflussregelventil 3, dem Durchfluss durch das Durchflussregelventil 3 und der vom Hydraulikfluid-Volumenstrom durchströmten Geometrie des Durchflussregelventils 3, wobei diese von der Geometrie des Durchflussregelventils 3 während des Zuschaltvorganges des Schaltelementes 9 abweichen kann.

Die vorbeschriebene Vorgehensweise zur Einstellung eines vorgegebenen zeitlichen Verlaufes eines Betätigungsdruckes kann auch bei Systemen verwendet werden, die zur Kühlung und Schmierung vorgesehen sind, sofern deren Widerstandscharakteristik bekannt ist. Die Widerstandscharakteristik ergibt sich unter anderem aus der Betriebstemperatur des Hydraulikfluides bzw. des Öles sowie des Durchflusses und weiterer relevanter Betriebsparametern.

Bezugszeichen

| 1 | Vorrichtung |
| 2 | Druckquelle, Hydraulikpumpe |
| 3 | Durchflussregelventil |
| 4 | Saugseite der Hydraulikpumpe |
| 5 | Ölsumpf |
| 6 | Druckseite der Hydraulikpumpe |
| 7 | Systemdruckventil |
| 8 | Getriebesteuergerät |
| 9 | Schaltelement |
| 10 | elektromagnetischer Aktor |
| 11 | Ankerstange |
| 12 | Ventilschieber |
| 13 | Feder |
| 14 | Ventilgehäuse |
| 15 | Leitung |

| 16 | Kolbenraum |
| 17 | Kolben |
| 18 | Lamellenpaket |
| 19 | Innenlamellen |
| 20 | Außenlamellen |
| 21 | Federeinheit |
| 22 | Leitung |
| 31 bis 33 | Ventilanschluss |
| e_9 | Bauteilelastizität |
| FS | Strömungskraft |
| p_sys | Systemdruck |
| p_16 | Kolbenraumdruck |
| V_16 | Volumen des Kolbenraumes |

**Patentansprüche**

1. Verfahren zum Betreiben einer Vorrichtung (1) mit einer hydraulischen Druckquelle (2), und mit einem steuerbaren Durchflussregelventil (3), an dem ein hydraulischer Druck der Druckquelle (2) anliegt und in dessen Bereich ein Betätigungsdruck (p_16) für ein hydraulisch betätigbares Schaltelement (9) eingestellt wird, wobei der Betätigungsdruck (p_16) stromab des Durchflussregelventils (3) im Bereich eines Kolbenraumes (16) des Schaltelementes anliegt (9), in dem ein Kolben (17) zwischen zwei Endstellungen längsverschieblich angeordnet ist, wobei eine Vorsteuerung des Durchflussregelventils (3) in Abhängigkeit eines Hydraulikfluid-Volumenstromes erfolgt, der durch das Durchflussregelventil (3) zu führen ist, um im Kolbenraum (16) des Schaltelementes (9) einen vorgegebenen zeitlichen Verlauf des Betätigungsdruckes (p_16) zu erzeugen **dadurch gekennzeichnet, dass** in Abhängigkeit des zeitlichen Verlaufes des Betätigungsdruckes (p_16) jeweils ein aktuelles Füllvolumen (V_16) des Kolbenraumes (16) und eine aktuelle Bauteilelastizität (e_9) des Schaltelementes (9) bestimmt werden, wobei die Bauteilelastizität (e_9) des Schaltelementes (9) in Abhängigkeit einer Stellung des Kolbens (17) des Schaltelementes (9) variiert.

2. Verfahren nach Anspruch 1, **dadurch gekennzeichnet, dass** der Hydraulikfluid-Volumenstrom, der durch das Durchflussregelventil (3) zu führen ist, in Abhängigkeit des Produktes aus der vorgegebenen zeitlichen Druckänderung im Kolbenraum (16) und der positionsabhängigen Bauteilelastizität (e_9) des Schaltelementes ermittelt wird.

3. Verfahren nach einem der Ansprüche 1 oder 2, **dadurch gekennzeichnet, dass** ein Strömungswiderstand einer Leitung (15), die das Durchflussregelventil (3) mit dem Kolbenraum (16) des Schaltelementes (9) verbindet, in Abhängigkeit des ermittelten Hydraulikfluid-Volumenstromes bestimmt wird.

4. Verfahren nach Anspruch 3, **dadurch gekennzeichnet, dass** der Strömungswiderstand der Leitung (15) in Abhängigkeit der Temperatur des Hydraulikfluides bestimmt wird.

5. Verfahren nach Anspruch 3 oder 4, **dadurch gekennzeichnet, dass** in Abhängigkeit des Strömungswiderstandes der Leitung (15) ein Druckverlust in der Leitung (15) zwischen dem Durchflussregelventil (3) und dem Kolbenraum (16) des Schaltelementes (9) bestimmt wird, wobei aus der Summe des Druckverlustes in der Leitung (15) und des Druckes (p_16) im Kolbenraum (16) des Schaltelementes (9) der Druck nach dem Durchflussregelventil (3) ermittelt wird.

6. Verfahren nach Anspruch 5, **dadurch gekennzeichnet, dass** der Durchflusswiderstand des Durchflussregelventils (3) während eines Betriebszustandsverlaufes des Schaltelementes (9), während dem der Druck (p_16) im Kolbenraum (16) angehoben wird, aus der Druckdifferenz zwischen dem Druck, der von der Druckquelle (2) am Druckregelventil (3) anliegt, und dem Druck nach dem Durchflussregelventil (3) und dem Hydraulikfluid-Volumenstrom, der durch das Durchflussregelventil (3) zu führen ist, bestimmt wird.

7. Verfahren nach Anspruch 5 oder 6, **dadurch gekennzeichnet, dass** der Durchflusswiderstand des Durchflussregelventils (3) während eines Betriebszustandsverlaufes des Schaltelementes (9), während dem der Druck (p_16) im Kolbenraum (16) abgesenkt wird, aus der Druckdifferenz zwischen dem Druck, der vom Kolbenraum (16) des Schaltelementes am Durchflussregelventil (3) anliegt, und dem Druck nach dem Durchflussregelventil (3) und dem Hydraulikfluid-Volumenstrom, der durch das Durchflussregelventil (3) zu führen ist, bestimmt wird.

8. Verfahren nach Anspruch 6 oder 7, **dadurch gekennzeichnet, dass** das Durchflussregelventil (3) in Abhängigkeit der Summe aus dem Durchflusswiderstand des Durchflussregelventils (3), dem Druckverlust in der Leitung (15) und dem aktuell im Kolbenraum (p_16) des Schaltelementes (9) einzustellenden Drucks vorgesteuert betätigt wird.

9. Steuergerät (8) zum Betreiben einer Vorrichtung (1) mit einer hydraulischen Druckquelle (2), und mit einem steuerbaren Durchflussregelventil (3), an dem ein hydraulischer Druck der Druckquelle (2) anliegt und in deren Bereich ein Betätigungsdruck (p_16) für ein hydraulisch betätigbares Schaltelement (9) eingestellt wird, wobei der Betätigungsdruck (p_16) stromab des Durchflussregelventils (3) im Bereich eines Kolbenraumes (16) des Schaltelementes (9) anliegt, in dem ein Kolben (17) zwischen zwei Endstellungen längsverschieblich angeordnet ist, wobei das Steuergerät (8) derart ausgeführt ist, dass eine Vorsteuerung des Durchflussregelventils (3) in Abhängigkeit eines Hydraulikfluid-Volumenstromes erfolgt, der durch das Durchflussregelventil (3) zu führen ist, um im Kolbenraum (16) des Schaltelementes (9) einen vorgegebenen zeitlichen Verlauf des Betätigungsdruckes (p_16) zu erzeugen **dadurch gekennzeichnet, dass** das Steuergerät weiterhin derart ausgeführt ist, dass in Abhängigkeit des zeitlichen Verlaufes des Betätigungsdruckes (p_16) jeweils ein aktuelles Füllvolumen (V_16) des Kolbenraumes (16) und eine aktuelle Bauteilelastizität (e_9) des Schaltelementes (9) bestimmt werden, wobei die Bauteilelastizität (e_9) des Schaltelementes (9) in Abhängigkeit einer Stellung des Kolbens (17) des Schaltelementes (9) variiert.

10. Computerprogrammprodukt mit Programmcode-Mitteln, die auf einem computerlesbaren Datenträger gespeichert sind, um alle Schritte eines Verfahrens nach einem der Ansprüche 1 bis 8 durchzuführen, wenn das Computerprogrammprodukt auf einem Computer oder auf einer entsprechenden Recheneinheit, insbesondere einem Steuergerät gemäß Anspruch 9 ausgeführt wird.

**Claims**

1. Method for operating a device (1) with a hydraulic pressure source (2), and with a controllable flow control valve (3), at which a hydraulic pressure of the pressure source (2) prevails and in the region of which an actuating pressure (p_16) for a hydraulically actuable switching element (9) is set, wherein the actuating pressure (p_16) prevails downstream of the flow control valve (3) in the region of a piston chamber (16) of the switching element (9), in which piston chamber a piston (17) is arranged longitudinally displaceably between two end positions, wherein pilot control of the flow control valve (3) takes place as a function of a hydraulic fluid volume flow which is to be guided through the flow control valve (3), in order to generate a predetermined time course of the actuating pressure (p_16) in the piston chamber (16) of the switching element (9), **characterized in that** a current filling volume (V_16) of the piston chamber (16) and a current component elasticity (e_9) of the switching element (9) are each determined as a function of the time course of the actuating pressure (p_16), wherein the component elasticity (e_9) of the switching element (9) varies as a function of a position of the piston (17) of the switching element (9).

2. Method according to Claim 1, **characterized in that** the hydraulic fluid volume flow, which is to be guided through the flow control valve (3), is determined as a function of the product from the predetermined temporal pressure change in the piston chamber (16) and the position-dependent component elasticity (e_9) of the switching element.

3. Method according to either of Claims 1 or 2, **characterized in that** a flow resistance of a line (15), which connects the flow control valve (3) to the piston chamber (16) of the switching element (9), is determined as a function of the determined hydraulic fluid volume flow.

4. Method according to Claim 3, **characterized in that** the flow resistance of the line (15) is determined as a function of the temperature of the hydraulic fluid.

5. Method according to Claim 3 or 4, **characterized in that** a pressure loss in the line (15) between the flow control valve (3) and the piston chamber (16) of the switching element (9) is determined as a function of the flow resistance of the line (15), wherein the pressure downstream of the flow control valve (3) is determined from the sum of the pressure loss in the line (15) and the pressure (p_16) in the piston chamber (16) of the switching element (9).

6. Method according to Claim 5, **characterized in that** the flow resistance of the flow control valve (3) during an operating state course of the switching element (9), during which the pressure (p_16) in the piston chamber (16) is raised, is determined from the pressure difference between the pressure, applied by the pressure source (2) to the pressure control valve (3), and the pressure downstream of the flow control valve (3) and the hydraulic fluid volume flow to be passed through the flow control valve (3).

7. Method according to Claim 5 or 6, **characterized in that** the flow resistance of the flow control valve (3) during an operating state course of the switching element (9), during which the pressure (p_16) in the piston chamber (16) is lowered, is determined from the pressure difference between the pressure, applied by the piston chamber (16) of the switching element to the flow control valve (3), and the pressure downstream of the flow control valve (3) and the hydraulic fluid volume flow to be passed through the flow control valve (3).

8. Method according to Claim 6 or 7, **characterized in that** the flow control valve (3) is actuated in a pilot-controlled manner as a function of the sum of the flow resistance of the flow control valve (3), the pressure loss in the line (15) and the pressure currently to be set in the piston chamber (p_16) of the switching element (9).

9. Control unit (8) for operating a device (1) with a hydraulic pressure source (2), and with a controllable flow control valve (3), at which a hydraulic pressure of the pressure source (2) prevails and in the region of which an actuating pressure (p_16) for a hydraulically actuable switching element (9) is set, wherein the actuating pressure (p_16) downstream of the flow control valve (3) prevails in the region of a piston chamber (16) of the switching element (9), in which piston chamber a piston (17) is arranged longitudinally displaceably between two end positions, wherein the control unit (8) is designed in such a way that pilot control of the flow control valve (3) takes place as a function of a hydraulic fluid volume flow, which is to be guided through the flow control valve (3), in order to generate a predetermined time course of the actuating pressure (p_16) in the piston chamber (16) of the switching element (9), **characterized in that** the control unit is still designed in such a way that a current filling volume (V_16) of the piston chamber (16) and a current component elasticity (e_9) of the switching element (9) are each determined as a function of the time course of the actuating pressure (p_16), wherein the component elasticity (e_9) of the switching element (9) varies as a function of a position of the piston (17) of the switching element (9).

10. Computer program product with program code means which are stored on a computer-readable data carrier in order to carry out all steps of a method according to one of Claims 1 to 8 when the computer program product is run on a computer or on a corresponding computing unit, in particular a control unit according to Claim 9.

**Revendications**

1. Procédé pour faire fonctionner un dispositif (1) avec une source de pression hydraulique (2), et avec une soupape de régulation de débit (3) pouvant être commandée, sur laquelle une pression hydraulique de la source de pression (2) est appliquée et dans la zone de laquelle une pression d'actionnement (p_16) pour un élément de commutation (9) à actionnement hydraulique est réglée, la pression d'actionnement (p_16) étant appliquée en aval de la soupape de régulation de débit (3) dans la zone d'une chambre de piston (16) de l'élément de commutation (9), dans laquelle un piston (17) est disposé de manière à pouvoir coulisser longitudinalement entre deux positions d'extrémité, une commande pilote de la soupape de régulation de débit (3) étant effectuée en fonction d'un débit volumique de fluide hydraulique, qui doit être guidé à travers la soupape de régulation de débit (3), pour générer une évolution prédéfinie dans le temps de la pression d'actionnement (p_16) dans la chambre de piston (16) de l'élément de commutation (9), **caractérisé en ce qu'**en fonction de l'évolution dans le temps de la pression d'actionnement (p_16), un volume de remplissage actuel (V_16) de la chambre de piston (16) et une élasticité de composant actuelle (e_9) de l'élément de commutation (9) sont définis, l'élasticité de composant (e_9) de l'élément de commutation (9) variant en fonction d'une position du piston (17) de l'élément de commutation (9).

2. Procédé selon la revendication 1, **caractérisé en ce que** le débit volumique de fluide hydraulique, qui doit être guidé à travers la soupape de régulation de débit (3), est déterminé en fonction du produit à partir de la variation de pression dans le temps prédéfinie dans la chambre de piston (16) et de l'élasticité de composant (e_9) de l'élément de commutation dépendant de la position.

3. Procédé selon l'une des revendications 1 ou 2, **caractérisé en ce qu'**une résistance à l'écoulement d'une conduite (15), qui relie la soupape de régulation de débit (3) à la chambre de piston (16) de l'élément de commutation (9), est définie en fonction du débit volumique de fluide hydraulique déterminé.

4. Procédé selon la revendication 3, **caractérisé en ce que** la résistance à l'écoulement de la conduite (15) est définie en fonction de la température du fluide hydraulique.

5. Procédé selon la revendication 3 ou 4, **caractérisé en ce qu'**une perte de pression dans la conduite (15) entre la soupape de régulation de débit (3) et la chambre de piston (16) de l'élément de commutation (9) est définie en fonction de la résistance à l'écoulement de la conduite (15), la pression en aval de la soupape de régulation de débit (3) étant déterminée à partir de la somme de la perte de pression dans la conduite (15) et de la pression (p_16) dans la chambre de piston (16) de l'élément de commutation (9).

6. Procédé selon la revendication 5, **caractérisé en ce que** la résistance à l'écoulement de la soupape de régulation de débit (3) est définie à partir de la différence de pression entre la pression, qui est appliquée par la source de pression (2) sur la soupape de régulation de pression (3), et la pression après la soupape de régulation de débit (3) et le débit volumique fluide hydraulique, qui doit être guidé à travers la soupape de régulation de débit (3), pendant une évolution d'état de fonctionnement de l'élément de commutation (9), pendant laquelle la pression (p_16) augmente dans la chambre de piston (16).

7. Procédé selon la revendication 5 ou 6, **caractérisé en ce que** la résistance à l'écoulement de la soupape de régulation de débit (3) est définie à partir de la différence de pression entre la pression, qui est appliquée par la chambre de piston (16) de l'élément de commutation sur la soupape de régulation de pression (3), et la pression après la soupape de régulation de débit (3) et le débit volumique de fluide hydraulique, qui doit être guidé à travers la soupape de régulation de débit (3), pendant une évolution d'état de fonctionnement de l'élément de commutation (9), pendant laquelle la pression ($p\_16$) dans la chambre de piston (16) est abaissée.

8. Procédé selon la revendication 6 ou 7, **caractérisé en ce que** la soupape de régulation de débit (3) est actionnée de manière pré-commandée en fonction de la somme de la résistance à l'écoulement de la soupape de régulation de débit (3), de la perte de pression dans la conduite (15) et de la pression à régler actuellement dans la chambre de piston ($p\_16$) de l'élément de commutation (9).

9. Appareil de commande (8) pour faire fonctionner un dispositif (1) avec une source de pression hydraulique (2), et avec une soupape de régulation de débit (3) pouvant être commandée, sur laquelle une pression hydraulique de la source de pression (2) est appliquée et dans la zone de laquelle une pression d'actionnement ($p\_16$) pour un élément de commutation (9) à actionnement hydraulique est réglée, la pression d'actionnement ($p\_16$) en aval de la soupape de régulation de débit (3) étant appliquée dans la zone d'une chambre de piston (16) de l'élément de commutation (9), dans laquelle un piston (17) est disposé de manière à pouvoir coulisser longitudinalement entre deux positions d'extrémité, l'appareil de commande (8) étant réalisé de telle manière qu'une commande pilote de la soupape de régulation de débit (3) est effectuée en fonction d'un débit volumique de fluide hydraulique, qui doit être guidé à travers la soupape de régulation de débit (3) pour générer une évolution dans le temps prédéfinie de la pression d'actionnement ($p\_16$) dans la chambre de piston (16) de l'élément de commutation (9), **caractérisé en ce que** l'appareil de commande est par ailleurs réalisé de telle manière qu'un volume de remplissage actuel ($V\_16$) de la chambre de piston (16) et une élasticité de composant actuelle ($e\_9$) de l'élément de commutation (9) sont définis en fonction de l'évolution dans le temps de la pression d'actionnement ($p\_16$), l'élasticité de composant ($e\_9$) de l'élément de commutation (9) variant en fonction d'une position du piston (17) de l'élément de commutation (9).

10. Produit-programme d'ordinateur avec des moyens de code de programme, qui sont stockés sur un support de données lisible par ordinateur pour exécuter toutes les étapes d'un procédé selon l'une des revendications 1 à 8, lorsque le produit-programme d'ordinateur est exécuté sur un ordinateur ou sur une unité de calcul correspondante, en particulier un appareil de commande selon la revendication 9.

Fig. 1

EP 4 469 701 B1

Fig. 2

Fig. 3

20  9

p_16

18

17

16

15

21  19

**Fig. 4**

V_16

e_9

p_16

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102019210248 A1
- DE 102011121880 A1